# EUROPÄISCHE PATENTSCHRIFT

(11) **EP 3 488 839 B1**
(45) Veröffentlichungstag und Bekanntmachung des Hinweises auf die Patenterteilung: **08.01.2020**
(21) Anmeldenummer: 18203746.5
(22) Anmeldetag: 31.10.2018
(51) Int. Cl.: A61H 3/04

(54) **ROLLATOR MIT ELEKTRISCHEM ANTRIEB**
ROLLATOR WITH AN ELECTRICAL DRIVE
DÉAMBULATEUR À ENTRAÎNEMENT ÉLECTRIQUE

(30) Priorität: 22.11.2017 DE 102017127568
(43) Veröffentlichungstag der Anmeldung: 29.05.2019
(60) Teilanmeldung: 19204927.8
(73) Patentinhaber: Disco Drives Kirschey GmbH, 42329 Wuppertal (DE)
(72) Erfinder: Kirschey, Gerhard, 42329 Wuppertal (DE)
(74) Vertreter: Ostriga Sonnet Wirths & Vorwerk

(56) Entgegenhaltungen:
- WO-A1-99/16653
- WO-A1-2005/030105
- DE-A1-102011 106 561
- DE-B4-102007 062 406
- DE-U1-202009 009 547
- DE-U1-202013 007 716
- DE-U1-202016 002 904
- US-A- 1 565 719
- US-A- 4 096 920
- US-B1- 6 651 993
- US-B1- 8 006 786
- US-B1- 9 744 095

## Beschreibung

Die Erfindung betrifft einen Rollator,
- mit in einem in Fahrtrichtung vorne liegenden Radpaar und einem in Fahrtrichtung hinten liegenden Radpaar,
- mit einem Rahmen, der nach hinten gerichtete Streben aufweist,
- mit einer nachlaufenden Plattform, die am Rollator befestigt ist, wenigstens ein Rad aufweist und eine Stehfläche für eine den Rollator nutzende Person zur Verfügung stellt, und
- mit einem elektromotorischen Antrieb, mittels dessen der Rollator zumindest in Fahrtrichtung vorwärts bewegbar ist
- die nachlaufende Plattform mit ihrer Stehfläche zwischen den Rädern des hinteren Radpaares angeordnet ist, wobei
- der Rollator mit einer Koppeleinrichtung versehen ist, mittels derer die Plattform zug- und schublasthaltend am Rollator angeordnet ist.

Rollatoren als Gehhilfen für Menschen mit eingeschränkter Mobilität sind aus dem Stand der Technik allgemein bekannt. Sie ermöglichen es, den jeweiligen Nutzern eine Fülle von Unternehmungen des täglichen Alltages zu erledigen. Dabei helfen Sie nicht nur, Stürze von Personen mit eingeschränkter Mobilität zu vermeiden, sondern erlauben es solchen Menschen darüber hinaus, Lasten, wie Einkäufe des täglichen Bedarfs sicher zu transportieren. Insbesondere Menschen, denen der klassische Gehstock als Hilfe nicht ausreicht, für die jedoch eine Rollstuhlnutzung eine zu starke Mobilitätseinschränkung bedeuten würde, verhelfen Rollatoren zu einem größeren Bewegungsraum als es ohne solche Hilfsgeräte möglich wäre.

Je nach Mobilitätseinschränkung oder Einsatzbereich kann es für betroffene Menschen sehr kraftanstrengend sein, Wege mit dem Rollator zurückzulegen. Für solche Fälle sind im Stand der Technik verschiedene Möglichkeiten für einen elektromotorischen Antrieb vorgeschlagen worden. So offenbart EP 2 451 423 B1 einen Rollator mit einer nachlaufenden Plattform. Diese verfügt über einen elektromotorischen Antrieb. Der Benutzer kann sich auf diese Plattform stellen und den Antrieb in Gang setzen. Der Rollator nebst Benutzer wird dann elektromotorisch vorwärtsbewegt. Die in der EP 2 451 423 B1 offenbarte Plattform ist elektromotorisch anhebbar in eine Lagerstellung.

Die DE 10 2007 062 406 B4 offenbart ebenfalls einen Rollator mit elektrischem Antrieb. Auch hier wird eine Transportplattform nachgeführt, wobei am Rollator ein separates Antriebsrad für den Vortrieb angeordnet ist.

Die DE 20 2013 007 716 U1 zeigt im Ausführungsbeispiel zwar eine Nachlaufeinrichtung für Kinderwagen, die jedoch gemäß Beschreibungstext geeignet ist, für einen Rollator genutzt zu werden. Die dort beschriebene Ausführungsform zeichnet sich insbesondere dadurch aus, dass ein lenkbares Leitrad im zentralen Lenkmittelpunkt des aus Rollator und angehängter Transportplattform bestehenden Gespanns angeordnet ist.

Auch DE 20 2016 002 904 U1 zeigt einen Rollator mit elektrischem Antrieb. Hierbei handelt es sich wiederum um einen Nachläufer, der an einer Achse zwischen den Hinterrädern des Rollators angehängt ist. Eine ähnliche Ausführung zeigt US 8,006,786 B1

WO 2005/030105 offenbart eine Gehhilfe mit drei Radpaaren. Das mittlere Radpaar wird elektromotorisch angetrieben, wobei die Räder des Mittleren Radpaares nicht nur gleichsinnig, sondern auch gegensinnig betrieben werden können. Das vordere wie auch das hintere Radpaar sind schwenkbar am Rahmen angeordnet, eine nachlaufende Plattform fehlt jedoch.

US 9,744,095 B1 zeigt einen Rollator mit nachlaufender Plattform, die über zwei die Plattform zwischen sich aufnehmende Antriebsräder und ein am Heck der Plattform angeordnetes Stützrad aufweist.

Ebenfalls eine nachlaufende Plattform zeigt DE 20 2009 009 547 U1, wobei hier die Kopplung zwischen Rollator und Plattform vorderradnah erfolgt.

Schließlich ist noch auf die DE 103 55 161 A1, US1,565,719 B1 und DE 10 2005 014 613 A1 zu verweisen, welche elektromotorisch angetriebene Nachlaufeinrichtungen für Kinderwagen bzw. Einkaufswagen offenbaren.

US 4,096,920 B1 zeigt neben einem Einkaufswagen einen Rollstuhl mit nachlaufender Plattform.

DE 10 2011 106 561 A1 offenbart einen Lasten- und Transportroller mit elektromotorischem Antrieb. Im Betrieb läuft ein Lastenträber auf einem Radpaar, wohingegen die nachlaufende Plattform an ihrem Ende lediglich ein Rad aufweist. Die Plattform lässt sich anheben, und in eine Lagerstellung verbringen, wobei dann bei einer Ausführungsform Stützräder für einen stabilen Stand des Rollers vorgesehen sind.

Mit US 6,651,993 B1 ist ebenfalls einen Lastenroller, dessen Transportmodul jedoch stabil auf wenigstens drei Rädern steht und mit einer nachlaufenden, einrädrigen Plattform versehen ist. Ein elektromotorischer Antrieb ist nicht offenbart.

Schließlich offenbart WO 99/16653 einen Kinderwagen mit nachlaufender Plattform, wobei auch hier kein elektromotorischer Antrieb gezeigt ist.

All den Vorrichtungen aus dem druckschriftlich bekannten Stand der Technik ist gemein, dass der am Rollator, Kinderwagen oder Einkaufswagen angehängte Nachläufer eine Stehfläche für eine Person aufweist, sodass die Person und das voreilende Hilfsmittel (Kinderwagen, Einkaufswagen, Rollator) über den elektromotorischen Antrieb fortbewegt werden.

Solche Einrichtungen sind besonders vorteilhaft für mobilitätseingeschränkte Menschen, die beispielsweise Steigungen bewältigen müssen oder ohne einen elektromotorischen Hilfsantrieb aus einer Erschöpfung heraus einen angestrebten Zielort nicht ohne Pause erreichen können.

Die vorgestellten Lösungen sind in der Regel als Nachrüstlösung ausgeführt. Teilweise können die Nachläufer bei Nichtgebrauch in eine Lagerstellung bewegt oder vom Rollator entfernt werden.

Aufgabe der Erfindung ist es, einen elektromotorisch angetriebenen Rollator bereit zu stellen, welcher für den Benutzer sicher in der Handhabung ist.

Gelöst wird diese Aufgabe zunächst von einem Rollator mit den Merkmalen des Anspruchs 1, insbesondere mit dessen kennzeichnenden Merkmalen, wonach die Koppeleinrichtung zur Anbindung einer Vertikalstrebe über eine Schubaufnahme verfügt, in welcher die Vertikalstrebe verschiebbar gelagert ist, die Vertikalstrebe eine Verbindung zwischen der Plattform und der Koppeleinrichtung herstellt.

Der wesentliche Vorteil der Erfindung liegt zunächst darin, erkannt zu haben, dass die Anordnung der nachlaufenden, dem Transport der benutzenden Person dienenden Plattform im Stand der Technik ergonomisch ungünstig ist. Im vorzitierten Stand der Technik befindet sich die nachlaufende Plattform bei Rollatoren hinter der bei Fortbewegung ohne Antrieb eingenommenen Position des benutzenden Menschen.

Da die Plattform nunmehr in etwa dort angeordnet ist, wo sich eine nutzende Person befindet, wenn der Rollator ohne elektrischen Antrieb betrieben wird, kann diese durch die erfindungsgemäße Plattformanordnung eine ergonomisch günstige, aufrechte Körperhaltung einnehmen. Gleichzeitig ist das aus Rollator und Plattform bestehende Gespann bei erfindungsgemäßer Plattformanordnung wesentlich kippstabiler als die im Stand der Technik gezeigten Hilfsmittel, insbesondere, wenn die von der Plattform zur Verfügung gestellte Stehfläche vollständig oder zumindest etwa zur Hälfte vor einer durch die Drehachsen der Hinterräder gelegten, geometrischen Achse angeordnet ist.

Es ist vorgesehen, dass die Plattform eine sich nach hinten verjüngende Stehfläche aufweist.

Dabei ist insbesondere vorgesehen, dass die Plattform an ihrem hinten liegenden Ende mit zumindest einem Rad versehen ist, welches insbesondere als Antriebsrad mit integriertem Elektromotor ausgebildet ist.

Eine sich nach hinten verjüngende Plattform, insbesondere mit sich nach hinten verjüngender Stehfläche und mit einem einzigen, am hinteren Ende der Plattform mittig angeordneten Rad, insbesondere Antriebsrad, bietet zunächst durch das hinten liegende Antriebsrad eine gute Abstützung der Plattform Das hinten liegende Antriebsrad wird durch die physikalisch wirkenden Kräfte mit einem hohen Bodendruck versehen, so dass die Gefahr eines Radschlupfes minimiert ist. Die sich nach hinten verjüngende Stehfläche entspricht zudem der in etwa trapezförmigen Aufstandsfläche der Füße einer stehenden Person. Dies macht sich die Erfindung zunutze, indem sie die Plattform an diese Stehfläche anpasst und nach hinten hin verjüngend zulaufen lässt. Hierdurch wird insbesondere bei Kurvenfahrten des Gespanns mehr nutzbarer Raum zwischen den hinteren Rädern des Rollators zur Verfügung gestellt, was engere Kurvenradien ermöglicht.

Es ist vorgesehen, dass die Plattform einen Akkumulator zur Stromversorgung des Elektromotors trägt, wobei dieser insbesondere an der Unterseite der Plattform oder in einem Aufnahmeschacht auf der Oberseite der Plattform angeordnet ist.

In einer ausgesprochen bevorzugten Weiterbildung ist vorgesehen, dass neben dem Akkumulator alle weiteren wesentlichen Bestandteile des elektromotorischen Antriebs, beispielsweise die Antriebssteuerung, eine eventuelle Laderegelelektronik für den Akkumulator an der Plattform angeordnet sind. Für den Schwerpunkt der Plattform und des Gespanns insgesamt ist es vorteilhaft, wenn der Akku unterhalb der Plattform angeordnet ist. Es ist denkbar, dort ein Fach oder eine Schublade vorzusehen, so dass der Akku zu Ladezwecken entnommen werden kann. Denkbar ist jedoch auch, den Akkumulator dort fest zu verbauen und mit einem Steckanschluss zum Laden zu versehen. In einem solchen Falle wäre die Plattform in die Nähe eines Stromanschlusses zu bewegen, um den Akkumulator zu laden. Ein unterhalb der Plattform angeordneter Akku hat den Vorteil, dass die auf der Oberseite der Plattform gebildete Stehfläche maximiert ist.

Um die Entnahme bzw. den Austausch eines Akkumulators zu erleichtern, ist es jedoch denkbar, zur Aufnahme des Akkumulators einen auf der Plattform angeordneten Schacht oder eine Halterung vorzusehen. Dieser kann darüber hinaus Platz für diverse Steuer- und Elektronikkomponenten aufweisen. Dieser Schacht bzw. die Halterung ist idealerweise entlang der in Fahrtrichtung angeordneten Längsachse der Plattform orientiert und teilt die Plattform in zwei Stehflächenhälften, so dass bei Nutzung der Plattform der Schacht zwischen den Füssen des Benutzers angeordnet ist.

Wenn alle wesentlichen, für den elektromotorischen Betrieb notwendigen Komponenten Teil der Plattform sind, sind diese mit Entfernen der Plattform vom Rollator abgenommen, so dass mit einem Handgriff vom motorisch betriebenen Rollator zum nicht motorischen Betrieb gewechselt werden kann.

Eine Bedienungshandhabe zur Einstellung der Vortriebsgeschwindigkeit des Rollators, beispielsweise ein als Drehgriff ausgestalteter Handgriff, kann per Funkverbindung mit der auf der Plattform angeordneten Steuerung verbunden sein. Sollte eine Kabelverbindung von der Bedienungshandhabe zur Steuerung geführt sein, ist diese Kabelverbindung im Bereich einer Koppeleinrichtung zwischen Plattform und Rollator trennbar, insbesondere durch eine auflösbare Steckverbindung. Eine Funkverbindung nach Bluetooth-Standard ist bevorzugt.

Es ist vorgesehen, dass die Koppeleinrichtung ein einfaches Verbinden und Lösen der Plattform am Rollator ermöglicht. Infolgedessen kann der Rollator recht einfach von motorisierten auf unmotorisierten Betrieb umgestellt werden. Bevorzugt ist die Koppeleinrichtung an handelsübliche Rollatoren nachrüstbar und verbleibt am Rollator. Es kann sich hierbei beispielsweise um eine zwischen den die Hinterräder tragenden Streben angeordnete Koppelstange handeln, insbesondere wenn der Rollator parallel zu einer quer zur Bewegungsrichtung verlaufenden Achse zusammenlegbar ist.

Bei Rollatoren, die entlang einer parallel zur Bewegungsrichtung liegenden Achse zusammenlegbar sind und hierzu üblicherweise mit Scherenhebeln ausgerüstet sind, kann die Koppeleinrichtung ebenfalls als Koppelstange ausgebildet sein. Diese würde hier nach dem Aufrichten des Rollators in Halterungen eingesetzt werden, welche an den die Hinterräder haltenden Streben befestigt wurden. Hierbei kann es sich insbesondere um Koppelstangengabeln handeln. Alternativ ist vorstellbar, dass die Koppeleinrichtung im Bereich der sich kreuzenden Scherenhebel in Form einer Spange am Rollator festgelegt ist.

Die Erfindung sieht vor, dass die Koppeleinrichtung mit einem Gelenk versehen ist, welches eine durch Nickbewegungen hervorgerufene Relativverlagerung von Rollator und Plattform ermöglicht und eine Drehachse zwischen Rollator und Plattform definiert, um welche das Gespann aus Rollator und Plattform bei einer Kurvenfahrt knickt.

Hierbei ist vorgesehen, dass die Koppeleinrichtung über zumindest zwei Drehachsen verfügt. Eine erste Achse verläuft quer zur Bewegungsrichtung. Eine zweite Achse verläuft im Wesentlichen vertikal zur Plattformoberfläche. Dabei gleicht die quer zur Bewegungsrichtung ausgerichtete Achse Nickbewegungen aus. Die vertikal gerichtete Achse dient als Drehachse, um welche herum das Gespann bei Kurvenfahrt knickt. Um die Rollatorlängsachse findet keine Relativverlagerung zwischen Rollator und Plattform statt. Hinsichtlich dieser Achse ist die Verbindung drehfest.

Vorgesehen ist ferner, dass die Koppeleinrichtung mit einer Horizontalachse versehen ist, mittels derer die Plattform von einer der Nutzung dienenden Funktionsstellung in eine Lagerstellung bewegbar ist.

Hierbei ist insbesondere vorgesehen, dass die zum Verlagern der Plattform zwischen Funktionsstellung und Lagerstellung genutzte Horizontalachse mit der die Nickbewegungen ausgleichenden Achse zusammenfällt.

Vorgesehen ist ferner, dass die Plattform in ihrer Funktionsstellung unterhalb der Koppeleinrichtung angeordnet ist und mittels einer Vertikalstrebe in der Koppeleinrichtung gehalten ist.

Dabei ist insbesondere von Vorteil, wenn die Koppeleinrichtung eine Schubaufnahme aufweist, die die Vertikalstrebe aufnimmt und innerhalb derer die Vertikalstrebe verschieblich gehalten ist.

Die Schubaufnahme erlaubt es, die Plattform in ihrer Lagerstellung in Richtung der Vorderräder des Rollators zu verschieben und somit den Raum zwischen den Hinterrädern als Bewegungsraum für den Benutzer freizuhalten.

Vorgesehen ist weiterhin, dass die Koppeleinrichtung eine Hubhilfe aufweist, mittels derer eine Bewegung der Plattform von ihrer Funktionsstellung in ihre Lagerstellung unterstützt wird, wobei insbesondere eine mechanische Hubhilfe, wie beispielsweise eine Hubfeder vorgesehen ist.

Alternativ kann die Hubhilfe auch elektromotorisch ausgestaltet sein.

Vorgesehen ist weiterhin, dass das Rad mit einer um die Radachse drehbaren Schutzeinrichtung versehen ist, welche in der Lagerstellung der Plattform zum Nutzer des Rollators weist und die zum Nutzer weisende Lauffläche des Rades abdeckt.

Die hier vorgesehene Schutzeinrichtung, im Grunde ein das Rad überfangendes Schutzblech, hat hier einen Doppelnutzen. Zum einen schützt es den Benutzer davor, mit dem Antriebsrad bei Nutzung des elektromotorischen Antriebs in Berührung zu kommen und hilft so Unfälle zu vermeiden.

Wenn hingegen die Plattform in ihrer Lagerstellung befindlich, also hochgeklappt ist, lässt sich das Schutzblech hingegen um die Radachse drehen, so dass es zum Rollator-Benutzer weist. Es deckt so die zum Benutzer weisende Lauffläche des Antriebsrades ab und schützt so vor möglicherweise am Antriebsrad anhaftenden Schmutzpartikeln.

Ferner ist vorgesehen, dass die Plattform auch bei einer Kurvenfahrt innerhalb einer Fläche nachläuft, die seitlich von den Radialebenen der hinteren Räder begrenzt ist.

Der Vorteil dieser erfindungsgemäßen Ausführungsform liegt darin, dass eine sehr hohe Kippstabilität des aus Rollator und Plattform bestehenden Gespanns erzielt wird.

Eine weitere Verbesserung der Stabilität wird erreicht, wenn die Aufstandsfläche des Benutzers auf der Plattform im Wesentlichen innerhalb eines von den Hinterrädern des Rollators und dem Rad der Plattform gebildeten Dreiecks angeordnet ist.

Es ist vorgesehen, dass die Plattform von der Koppeleinrichtung trennbar ist.

Ferner ist vorgesehen, dass die Plattform entlang einer fahrtrichtungsparallelen Längsachse zusammenlegbar ist.

Der wesentliche Vorteil einer solchermaßen zusammenlegbaren Plattform ist die bessere Transportier- und Lagerfähigkeit.

Offenbarte ist auch ein Rollator bei welchem die Koppeleinrichtung zwischen einer geometrischen Rotationsachse der Hinterräder und einer geometrischen Rotationsachse der Vorderräder angeordnet ist.

Dank der Anordnung der Koppelreinrichtung zwischen der Vorder- und der Hinterachse des Rollators belastet die Gewichtskraft des auf der Plattform stehenden Benutzers auch die Vorderachse. Dies verhindert wirksam ein Abheben der Vorderräder vom Boden, insbesondere bei Bergauffahrt oder dem Überfahren von Hindernissen, wie Bordsteinkanten. Die grundsätzlich vorhandene Zusatzlast auf den Vorderrädern des Rollators wirkt auch bei einer Fahrt in der Ebene stabilisierend Die Fahrstabilität des Rollators ist somit gegenüber Koppellösungen an der oder hinter der geometrischen Hinterachse durch die sowohl auf die Vorderräder als auch auf die Hinterräder des Rollators wirkende Teillast des Benutzers wesentlich verbessert.

Weitere Vorteile ergeben sich aus der nachfolgenden Beschreibung verschiedener Ausführungsbeispiele. Es zeigen:
- Fig. 1:: einen Rollator erster Bauart aus dem Stand der Technik,
- Fig. 2:: einen Horizontalschnitt durch den Rollator gemäß Fig. 1,
- Fig. 3:: ein erfindungsgemäßer Rollator in einer ersten Ausführungsform mit angehängter Plattform,
- Fig. 4:: die Plattform gemäß Fig. 3 in Alleinansicht,
- Fig. 4a:: die Plattform gemäß Fig. 4 mit vom Lagerdorn abgehobener Koppeleinrichtung,
- Fig. 5:: die Plattform gemäß Fig. 4 in Ansicht von oben,
- Fig. 6:: die Plattform gemäß Fig. 4 in Seitenansicht,
- Fig. 7:: den erfindungsgemäßen Rollator gemäß Fig. 3 in Vertikalschnitt mit angehobener Plattform,
- Fig. 8:: die Darstellung gemäß Fig. 7 mit Plattform in Lagerstellung,
- Fig. 9:: den Rollator gemäß Fig. 3 mit alternativer Plattformbefestigung an einer vorhandenen Querstange,
- Fig. 10:: einen erfindungsgemäßen Rollator zweiter Bauform mit Plattform,
- Fig. 11 und Fig. 12:: Detailansichten der Plattformbefestigung am Rollator gemäß Fig. 10,
- Fig. 13:: den Rollator gemäß Fig. 10 mit alternativer Plattformbefestigung,
- Fig. 14:: eine alternative Plattform in perspektivischer Aufsicht.

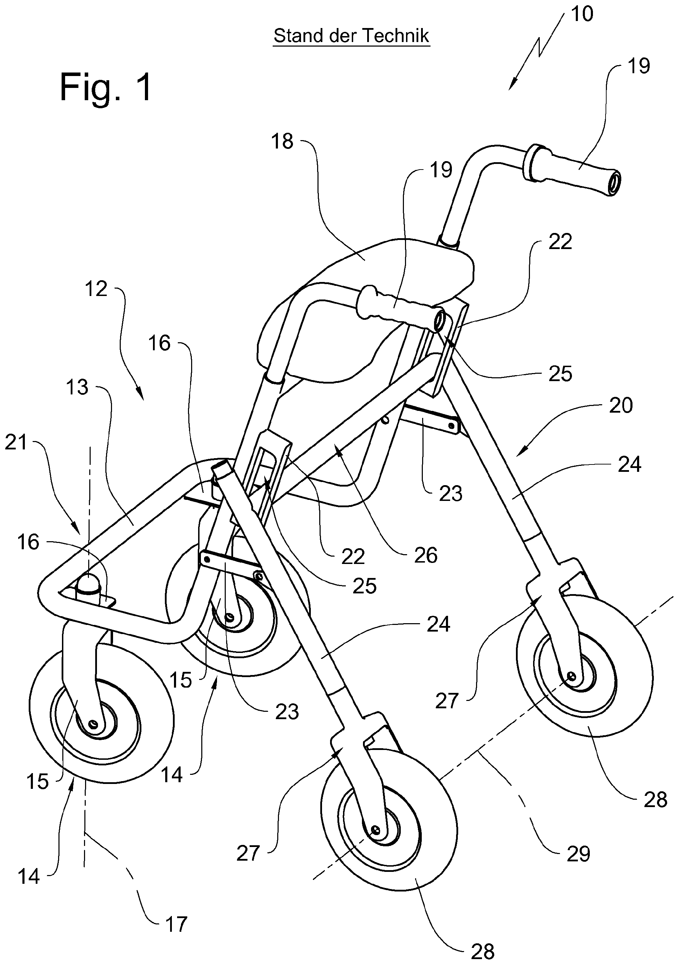

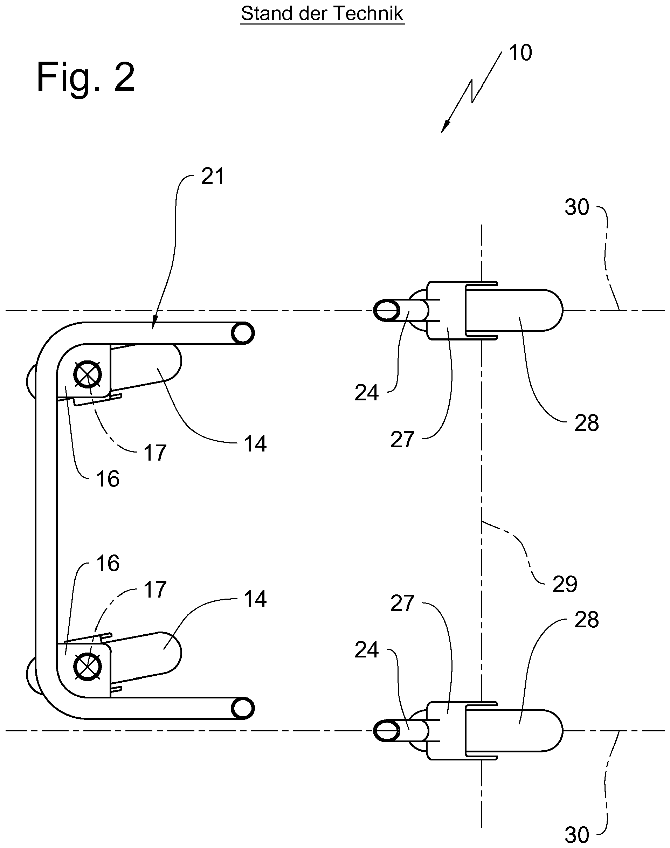

In den Figuren ist ein Rollator insgesamt mit der Bezugsziffer 10 versehen. In den Figuren 1 und 2 ist zur Einführung in die Erfindung zunächst ein Rollator 10 aus dem Stand der Technik gezeigt, welcher in den weiteren Figuren in verschiedenen Ausführungsformen und ergänzt um eine nachlaufende Plattform 11 einen erfindungsgemäßen Rollator 10 bildet. Insofern gilt, soweit nichts anderes gesagt, die generelle Beschreibung des Rollators des Standes der Technik auch für die erfindungsgemäßen Rollatoren, weshalb für identische oder analog wirkende Bauteile gleiche Bezugszeichen verwendet werden.

Fig. 1 zeigt den Rollator 10 aus dem Stand der Technik in perspektivische Ansicht. Der Rollator 10 verfügt zunächst über einen insgesamt mit der Bezugsziffer 12 versehenen Rahmen aus einem rohrartigen Gestänge 13, welches der Befestigung verschiedener Bauteile dient. Der Rahmen 12 ist zweigeteilt und bildet einen vorderen Rahmenabschnitt 21 und einen hinteren Rahmenabschnitt 20. Der Rahmen 12 mit seinem vorderen Rahmenabschnitt 21 trägt zunächst zwei nebeneinander angeordnete Vorderräder 14, die von je einer vorderen Radgabel 15 gehalten sind. Dabei sind die vorderen Radgabeln 15 in einer Radgabelhalterung 16 um eine vertikale Drehachse 17 schwenkbar am Rahmen 12 angeordnet.

Der Rahmen 12 trägt sodann ein Sitz- oder Stützbrett 18 sowie zwei Haltegriffe 19, welche teleskopierbar im Rohrgestänge des Rahmens 12 gehalten sind, um eine stufenlose Höhenverstellung und somit eine Anpassung an die Größe des Benutzers zu ermöglichen. Bei einem erfindungsgemäßen Rollator 10 ist zumindest einer der Haltegriffe 19 als Drehgriff ausgestaltet, wobei eine Drehung des Griffes der Elektrizitätseinspeisung an einem Motor dient. Mit einem steigenden Drehwinkel des Haltegriffs 19 wird die Motordrehzahl erhöht. Der Drehgriff verlagert sich automatisch in eine Nullstellung, wenn er von der Bedienperson losgelassen wird. In dieser Nullstellung wird der Vortrieb durch den Motor gestoppt.

Der hintere Rahmenabschnitt 20 ist am vorderen Rahmenabschnitt 21 über langlochversehene Halteteile 22 und zwei Kniehebel 23 festgelegt.

Der hintere Rahmenabschnitt 20 besteht im Wesentlichen aus zwei parallel zueinander gerichteten Streben 24, welche über eine in den Halteteilen 22 bzw. deren Langlöchern 25 gelagerte, horizontale Verbindungsstange 26 miteinander gekoppelt sind. Jeder Kniehebel 23 verbindet je eine Strebe 24 mit dem vorderen Rahmenabschnitt 21.

Jede Strebe trägt eine hintere Radgabel 27, wobei in jeder Radgabel 27 ein Hinterrad 28 gehalten ist. Durch die Drehachsen der Hinterräder 28 ist eine geometrische, die Räder verbindende, körperlich nicht vorhandene Hinterachse 29 zu legen. Dabei sind die Hinterräder 28 starr, das heißt nicht schwenkbar in den hinteren Radgabeln 27 festgelegt.

Der in Fig. 1 dargestellte Rollator kann zusammengelegt werden, indem die horizontale Verbindungsstange im Langloch nach oben verlagert wird, wobei die Kniehebelgelenke 23 zusammengelegt werden.

Fig. 2 zeigt den Rollator gemäß Fig. 1 in einem Vertikalschnitt. Die Schnittebene liegt leicht oberhalb der hinteren Radgabeln 27. Zu entnehmen ist dieser Zeichnung insbesondere die schwenkbare Lagerung der Vorderräder 14 in den Radgabelhalterungen 16. Dargestellt ist darüber hinaus die geometrische Hinterachse 29, welche in der folgenden Zeichnungsbeschreibung eine Rolle spielen wird, sowie die von jedem Hinterrad 28 aufgespannte Radialebene 30.

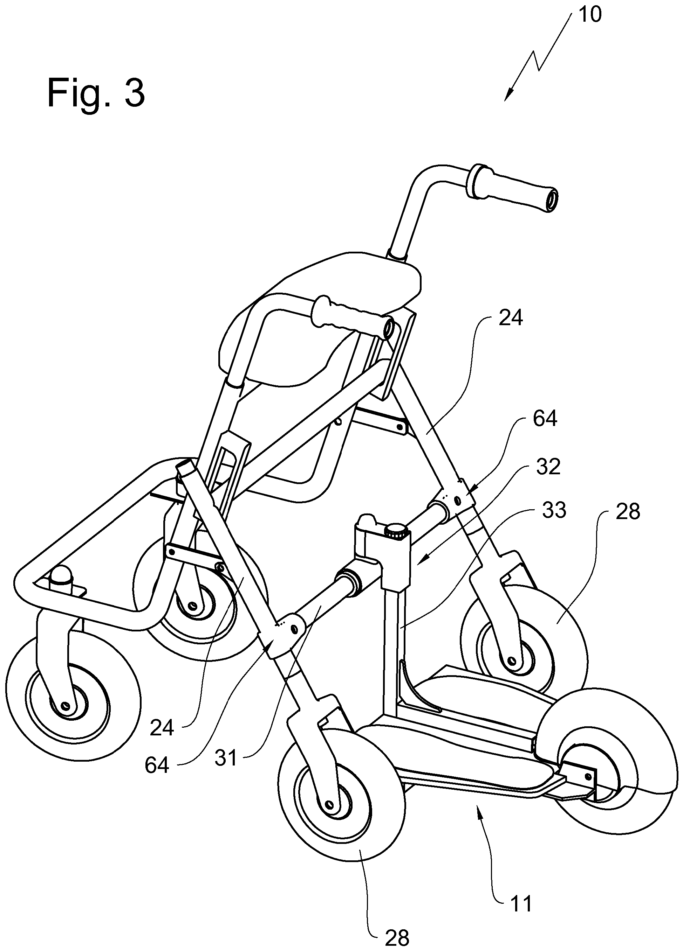

In Fig. 3 ist nunmehr einer erfindungsgemäßer Rollator 10 dargestellt. Dieser gleicht dem in den Figuren 1 und 2 dargestellten Rollator aus dem Stand der Technik, ist jedoch erfindungsgemäß um die nachlaufende Plattform 11 ergänzt worden. Hierzu bedient sich die Erfindung zunächst einer Koppelstange 31, die horizontal bzw. parallel zur horizontalen Verbindungsstange 26 ausgerichtet ist und die hinteren Streben 24, welche die Hinterräder 28 halten, miteinander verbindet. Die Koppelstange 31 ist mittels zweier Schellen 64 an den hinteren Streben 24 festgelegt.

An der Koppelstange 31 ist die eigentliche Koppeleinrichtung 32 befestigt, in welcher eine Vertikalstrebe 33 einsitzt, die eine Verbindung zwischen der Plattform 11 und der Koppeleinrichtung 32 herstellt. Die nachlaufende Plattform 11 ist mit ihrer Aufstandsfläche zwischen den Hinterrädern 28 angeordnet, so dass der Nutzer auf der Plattform 11 eine ähnliche Position relativ zu den Haltegriffen 19 einnimmt, wie bei einer Rollatornutzung ohne Plattform 11. Gegenüber den Lösungen aus dem Stand der Technik nimmt der Benutzer der Plattform 11 eine besonders ergonomische Position ein. Auch erhöht sich die Kippstabilität des Gespanns aus Rollator 10 und Plattform 11 bei der Kurvenfahrt erheblich, da alle vier Räder des Rollators belastet sind.

Die Anordnung der Koppeleinrichtung zwischen einer gedachten, geometrischen Rotationsachse der Vorderräder 14 und einer gedachten, geometrischen Achse der Hinterräder 28 stabilisiert den Rollator 10 auch bei Geradeausfahrt. Die Gewichtskraft des Benutzers lässt sich so auch auf die Vorderräder 14 aufbringen, weshalb das Risiko eines Abhebens der Vorderräder 14 vermieden wird.

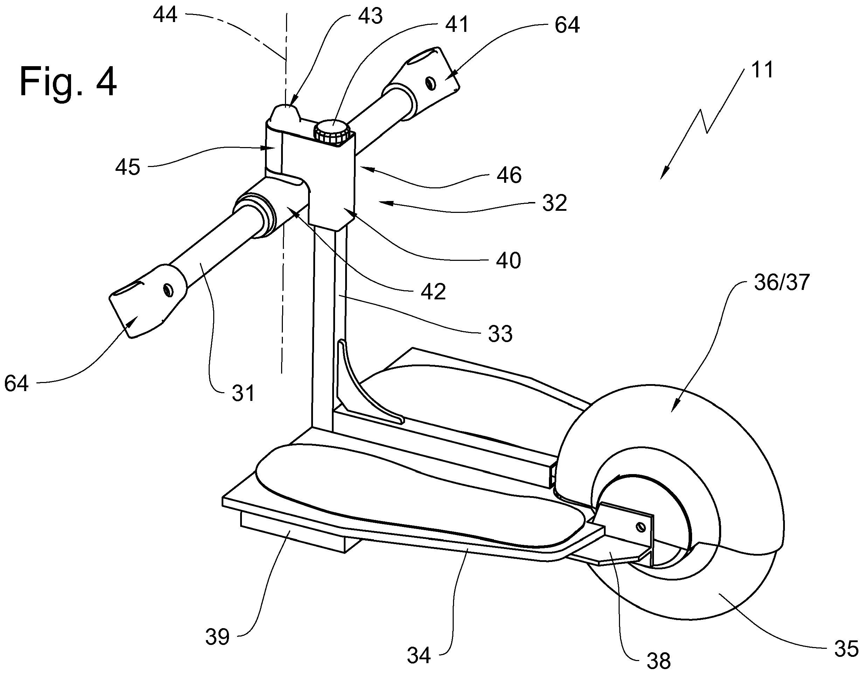

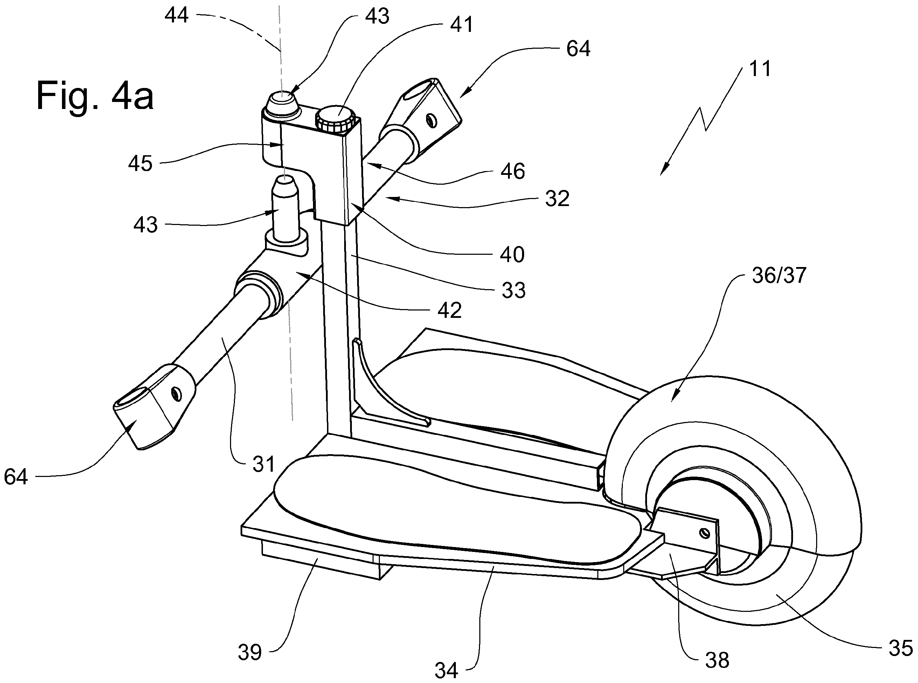

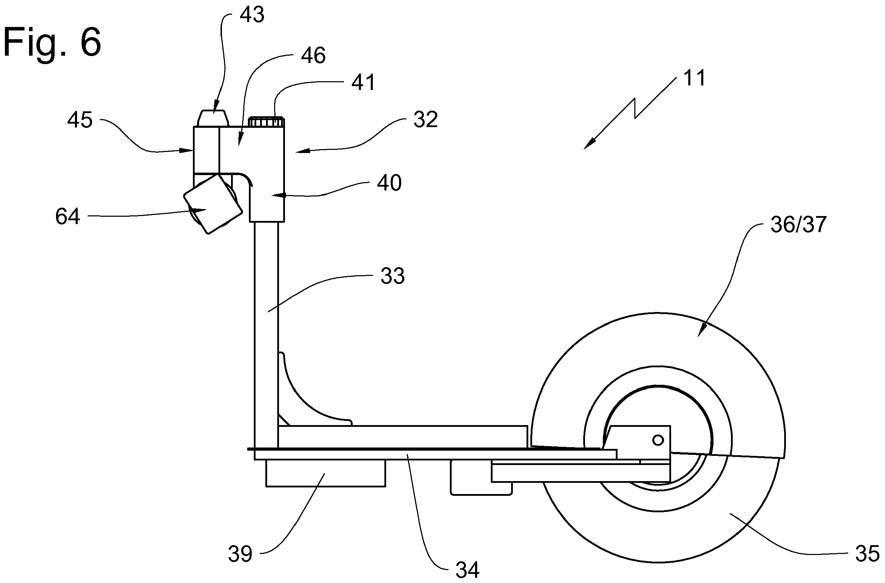

Die nachlaufende Plattform 11 ist mit Koppelstange 31 und Koppeleinrichtung 32 für sich allein in den Figuren 4 bis 6 dargestellt. Die nachlaufende Plattform 11 beinhaltet zunächst ein Brett 34, welches aus Holz jedoch auch aus faserverstärktem Kunststoff, insbesondere Polykarbonat oder Polyamid, aber auch aus anderen Werkstoffen hergestellt sein kann.

Am der Koppeleinrichtung 32 abgewandten Ende des Brettes 34 ist das Plattformrad 35 angeordnet, wobei dies zum Schutz des Benutzers zumindest teilweise von einer Schutzreinrichtung 36 in Form eines Schutzbleches 37 abgedeckt ist. Eine Plattformradgabel 38 legt das Plattformrad 35 am Brett 34 fest.

Bei einer bevorzugten Ausführungsform der Erfindung ist in das Plattformrad 35 ein Elektromotor integriert, sodass die Antriebseinheit für den erfindungsgemäßen Rollator durch das Plattformrad selbst gebildet ist. Der Motor ist mit einer Bremsfunktion ausgestattet, welche den Rollator bei Bergabfahrt vor einer Beschleunigung bewahrt. Bevorzugt ist die Motordrehzahl des Motors immer proportional zur Position des Drehgriffes 19, wenn eine Spannung anliegt. Ein Leerlauf ist im stromlosen Zustand oder durch eine separate Schaltung realisierbar, um den Rollator nebst Plattform händisch rangieren zu können.

In einer bevorzugten Ausführungsform lässt sich die Maximalgeschwindigkeit des aus Rollator 10 und Plattform 11 bestehenden Gespanns vorwählen. Dies kann insbesondere unerfahrenen Benutzern eine Hilfe beim Erlernen der Benutzung sein.

Auf der Unterseite des Brettes 34 ist ein flacher Akkumulator 39 angeordnet, welche die elektrische Antriebsenergie für das motorisch betriebene Plattformrad speichert. Im Idealfall ist der Akkumulator 39 in einem an der Unterseite des Brettes 34 angebrachten Schacht angeordnet, in welchem auch die Steuerelektronik untergebracht sein kann. Der Akkumulator 39 kann aus dem Schacht zu Ladezwecken entnehmbar sein. Ist der Akkumulator 39 in einer abweichenden Ausführungsform hingegen fest am Brett 34 angeordnet, sind Ladekontakte vorgesehen, um dem Akkumulator Elektrizität zuzuführen.

Die Anordnung des Antriebsrades 35 am hinteren Ende der Plattform 11 dient zunächst der Stabilität des Gespanns aus Rollator 10 und Plattform 11, indem die Last des Benutzers zwischen der Koppeleinrichtung 32 mit dem Plattformrad 35 wirkt. Zudem lässt sich so der Bodendruck des Plattformrades 35 maximieren, was einen möglichen Schlupf verhindert.

Die Koppeleinrichtung 32 verfügt zur Anbindung der Vertikalstrebe 33 über eine Schubaufnahme 40. In dieser kann die Vertikalstrebe 33 verschoben werden, worauf in Weiterem noch eingegangen wird. Um in der Funktionsposition der Plattform 11 einen Bewegungsendanschlag der verschieblich in der Schubaufnahme 40 gelagerten Vertikalstrebe 33 sicherzustellen, ist diese mit einer stirnseitig angebrachten Halteschraube 41 versehen. Diese kann für den Zweck einer Trennung von der Plattform und Koppeleinrichtung 32 vom Stirnende der Vertikalstrebe 33 gelöst werden, so dass dann die Vertikalstrebe 33 aus der Schubaufnahme 40 herausnehmbar ist. Weiterhin kann über die Halteschraube 41 die Feinjustage der Plattformneigung vorgenommen werden.

Zur Trennung des Gespanns von Rollator 10 und Plattform 11 wird die Koppeleinrichtung 32 vom Lagerdorn 43 abgehoben, wie in Fig. 4a dargestellt ist. Hierzu wird zunächst ein nicht dargestelltes Sicherungselement entfernt, welches ein unbeabsichtigtes Lösen von Lagerdorn 43 und Koppeleinrichtung 32 verhindert. Bei einer Kabelverbindung zwischen der Plattform 11 und dem Rollator 10 wäre eine vorzugsweise im Bereich der Koppeleinrichtung 32 befindliche Steckverbindung zu lösen. Das Sicherungselement, welches normalerweise die Verbindung zwischen der Koppeleinrichtung 32 und dem Lagerdorn 43 sichert, kann genutzt werden, um den Lagerdorn 43 gegen ein Umschlagen aus der Vertikalen zu halten. Dies kann insbesondere von Nutzen sein, wenn der Lagerdorn 43 kraftbeaufschlagt ist, um eine Verlagerung der Plattform 11 zu unterstützen, wie dies später noch beschrieben wird.

Die Koppeleinrichtung 32 dient unter anderem auch dazu, Nickbewegungen des aus Rollator 10 und Plattform 11 gebildeten Gespanns auszugleichen sowie dazu, eine Drehachse zwischen Rollator 10 und Plattform 11 zu definieren, um welches sich das Gespann bei einer Kurvenfahrt knickt. Um Nickbewegungen auszugleichen, umfasst die Koppeleinrichtung 32 zunächst einen horizontalen Hülsenabschnitt 42, welcher auf der Koppelstange 31 drehbar gelagert ist. Der Hülsenabschnitt 42 verfügt über einen vertikal ausgerichteten Lagerdorn 43, welcher die vertikale Drehachse 44 der Koppeleinrichtung 32 bildet und von einer Lagerhülse 45 eines die Schubaufnahme 40 ausbildenden Tragarmes 46 gebildet ist (siehe Fig. 4a).

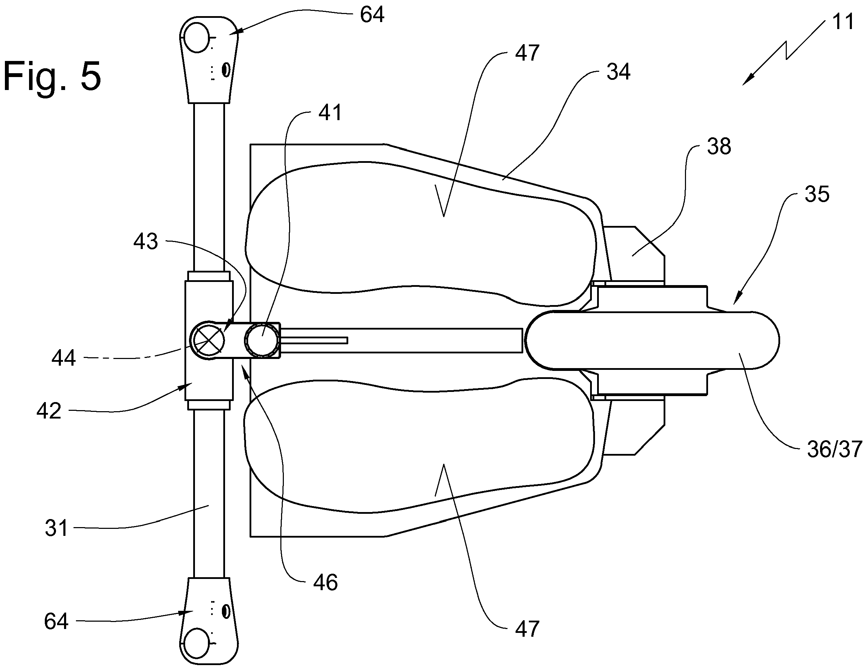

Wie insbesondere der Fig. 5, eine Aufsicht auf die Plattform 11 von oben, zu entnehmen ist, ist das Brett 34 der Plattform 11 nach hinten in Richtung Plattformrad 35 verjüngt ausgebildet und weist einen in etwa trapezförmigen Abschnitt auf. Es nimmt somit in etwa die Kontur der natürlichen Aufstandsfläche eines Menschen auf. Über Flächen 47 sind auf dem Brett 34 aufstehende Füße symbolisiert. der wesentliche Vorteil der trapezartigen Ausbildung des Brettes 34 bzw. des trapezförmigen Brettabschnittes ist insbesondere darin zu sehen, dass bei Kurvenfahrten mit dem erfindungsgemäßen Rollator 10 mehr Raum für die Plattform 11 zwischen den hinteren Rädern 28 vorhanden ist. Auch die Nutzung lediglich eines Plattformrades 35 am Plattformende, wie in den Ausführungsbeispielen dargestellt, hilft, den für Kurvenfahrten zur Verfügung stehenden Bewegungsraum zwischen den Hinterrädern 28 des Rollators 10 zu optimieren. Alternativ lassen sich auch zwei unmittelbar nebeneinander angeordnete Zwillingsräder am Plattformende nutzen.

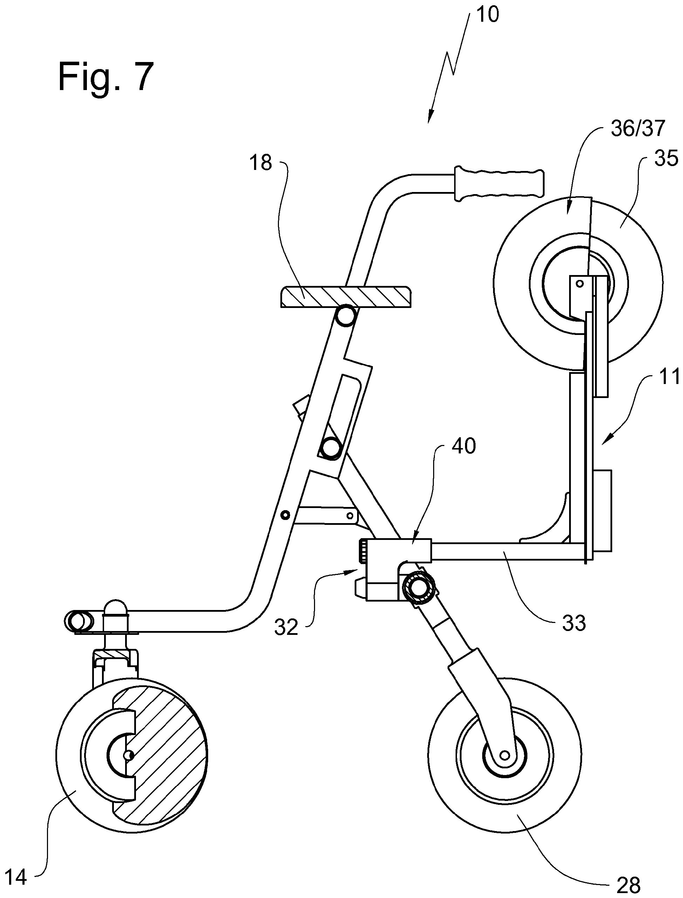

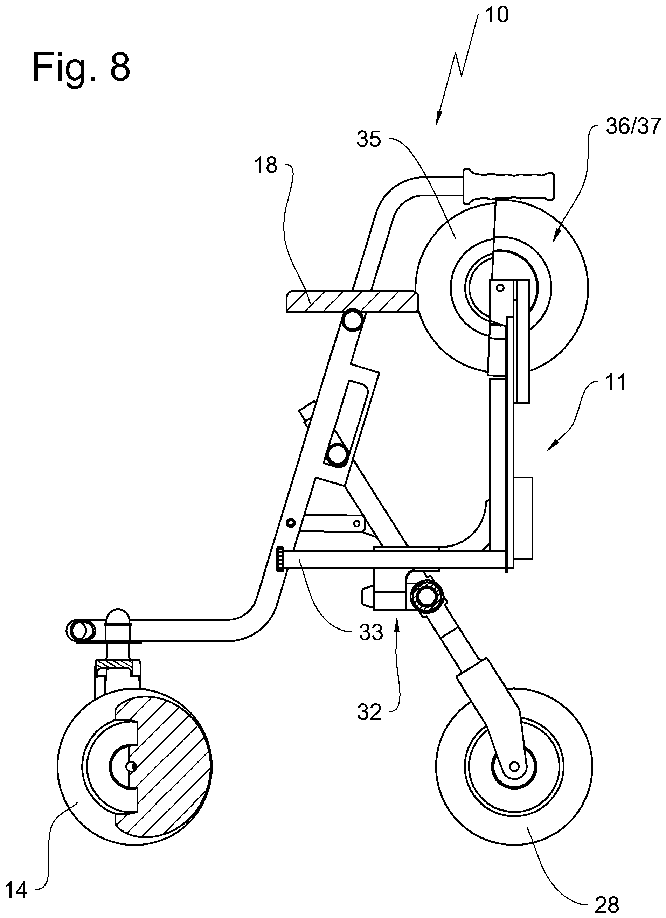

Wie bereits in der Beschreibungseinleitung angeklungen und in den Schutzansprüchen definiert, kann die Plattform 11 von einer auf dem Boden aufliegenden Funktionsstellung in eine Lagerstellung verbracht werden. Dies ist in den Figuren 7 und 8 dargestellt.

Um von der Funktionsstellung in die Lagerstellung bewegt zu werden, wird die Plattform 11 angehoben und das Rad in etwa in die Höhe des Sitz- bzw. Stützbrettes 18 gebracht. Dies entspricht einer Schwenkbewegung um etwa 90°. In abweichenden Ausführungsformen kann die Schwenkbewegung einen 90°-Winkel überschreiten, so dass das Plattformrad 35 auf dem Stützbrett 18 zur Ablage kommt. Dies hat für die Halterung des Rades in der Lagerstellung Vorteile, da sich eine optimierte Schwerpunktlage ergibt.

Um in seine Lagerstellung verbracht zu werden, wird die Plattform 11 in Richtung der Vorderräder 14 bewegt, indem die Vertikalstrebe 33 in der Schubaufnahme 40 der Koppeleinrichtung 32 in Richtung der Vorderräder 14 verschoben wird. Auf diese Weise wird die Plattform 11 in ihrer Lagerstellung aus dem Bewegungsbereich eines den Rollator bedienenden Benutzers herausverlagert. Infolgedessen kann der mit Plattform 11 in Lagerstellung befindliche Rollator 10 uneingeschränkt benutzt werden. Insbesondere ist eine ausreichende Kniefreiheit gegeben, sodass ohne Einschränkungen zu Fuß gegangen werden kann.

Wie insbesondere beim Vergleich der Figuren 7 und 8 auffällt, ist die Schutzeinrichtung 36 in ihrer Ausrichtung verändert worden. Die Schutzeinrichtung 36 bzw. das Schutzblech 37 ist um die Radachse herum schwenkbar angeordnet. So kann sie bei Plattform 11 in Lagerstellung um etwa 180° um das Plattformrad 35 herum gedreht werden und weist so zum Benutzer des Rollators 10. Auf diese Weise ist das Plattformrad 35 abgedeckt und der Rollatorbenutzer wird vor am Plattformrad 35 anhaftenden Schmutzpartikeln geschützt.

Um die Verlagerung der Plattform 11 zwischen einer Funktionsstellung und einer Lagerstellung zu ermöglichen, verfügt die Koppeleinrichtung 32 über eine Schwenkachse. Diese fällt im Ausführungsbeispiel mit der Koppelstange 31 zusammen, so dass die die Nickbewegungen des Gespanns ausgleichende Achse gleich der horizontalen Schwenkachse für die Verlagerung der Plattform 11 zwischen einer Funktionsstellung und einer Lagerstellung zusammenfällt.

Zur Unterstützung der Schwenkbewegung von Funktionsstellung in die Lagerstellung kann eine elektromotorische oder mechanische Unterstützung vorgesehen sein. Vorgesehen ist insbesondere eine mechanische Unterstützung mittels einer beispielsweise auf der Koppelstange 31 angeordneten Drehfeder. Auch mit einer Gasdruckfeder kann die Schwenkbewegung unterstützt werden.

Die Plattform 11 kann in ihrer Lagerstellung durch Rastelemente gehalten sein, wobei es sich hier beispielsweise um Kugelrasten handeln kann, die im Zwischenraum zwischen der Koppelstange 31 und dem Hülsenabschnitt 42 angeordnet sind. Ergänzend kann ein Haltegurt oder ein Magnet vorgesehen sein, mittels dessen die Plattform 11 in der Lagerstellung gesichert wird.

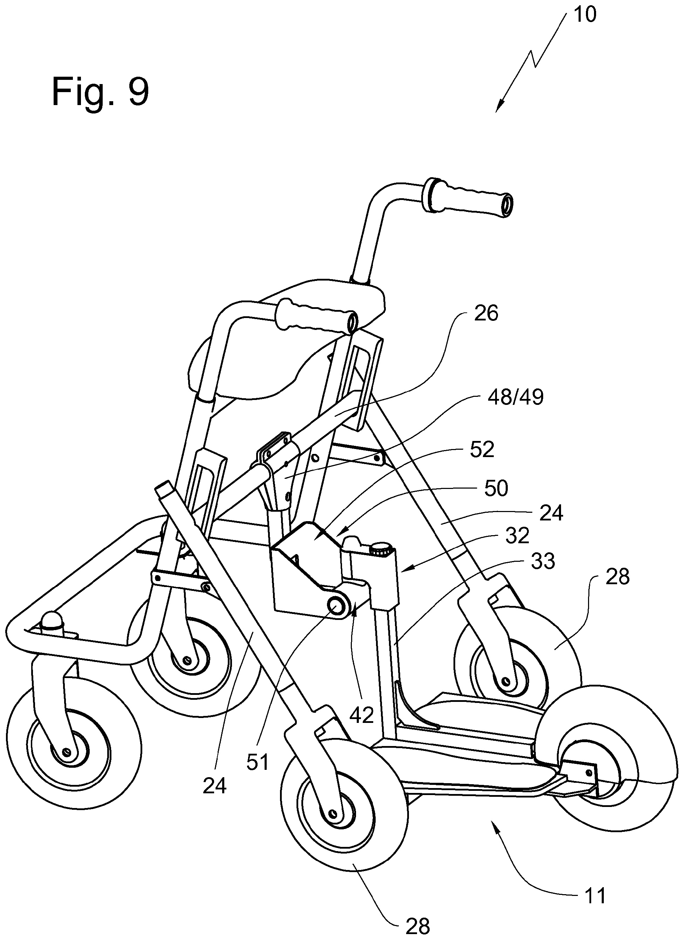

Fig. 9 zeigt unter Verwendung des eingangs beschriebenen Rollators 10 eine abgewandelte Ausführungsform der Erfindung. Zur Festlegung der Plattform 11 am Rollator 10 wird hier die horizontale Verbindungsstange 26 genutzt, über welche die die Hinterräder 28 haltenden Streben 24 aneinander angeordnet sind. Hierzu wird mittels eines geeigneten Befestigungselementes 48, hier eine Klemmeinrichtung 49, ein Koppelkorb 50 am Rollator 10 befestigt. Der Koppelkorb 50 trägt seinerseits die Koppeleinrichtung 32, die wie vorn beschrieben ausgeführt ist. Der Koppelkorb 50 selbst bildet ein Achselement 51 aus, um welches herum der Hülsenabschnitt 42 der Koppeleinrichtung 32 gelagert ist.

Der Koppelkorb 50 verfügt über eine Schubausnehmung 52, durch welche die Vertikalstrebe 33 der Plattform hindurchschiebbar ist, wenn die Plattform 11 in ihrer Lagerstellung angeordnet ist. Dann dient der Koppelkorb 50 gleichzeitig dazu, die Plattform 11 in ihrer Lagerstellung zu halten, indem die Vertikalstrebe 33 sich an den Rädern der Schubausnehmung 52 abstützt und so eine Rückverlagerung der Plattform 11 in Funktionsstellung blockiert.

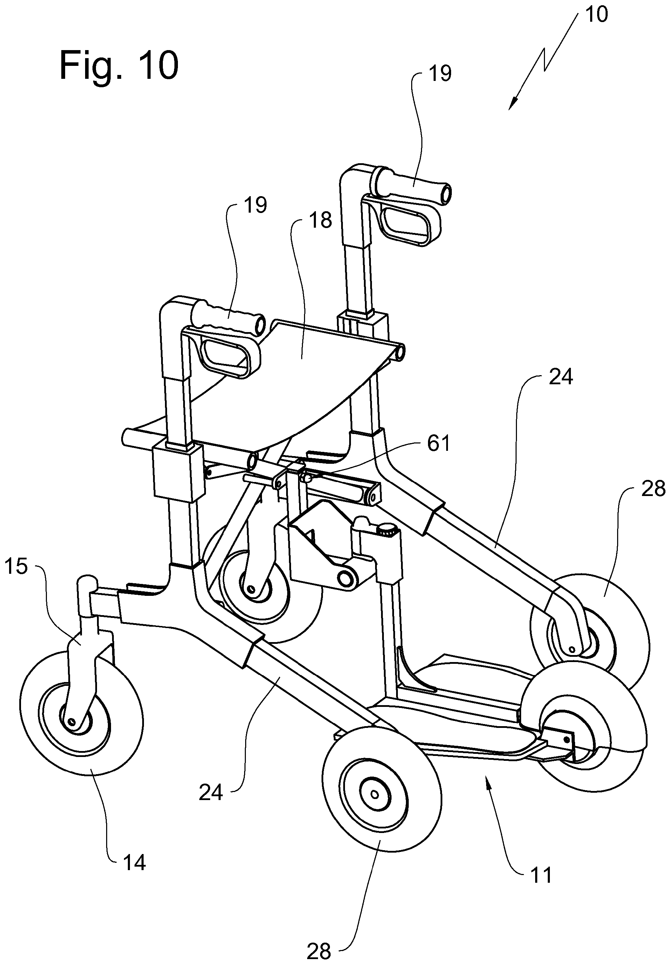

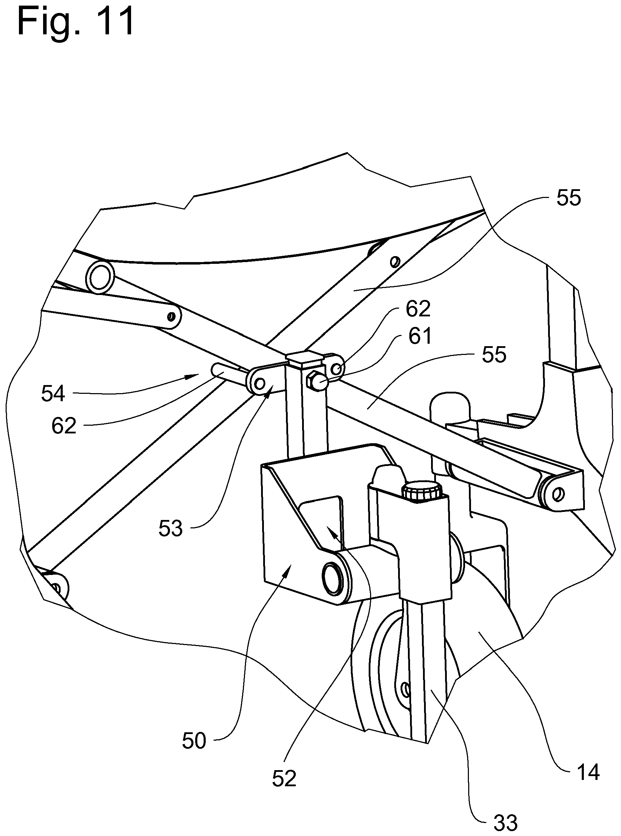

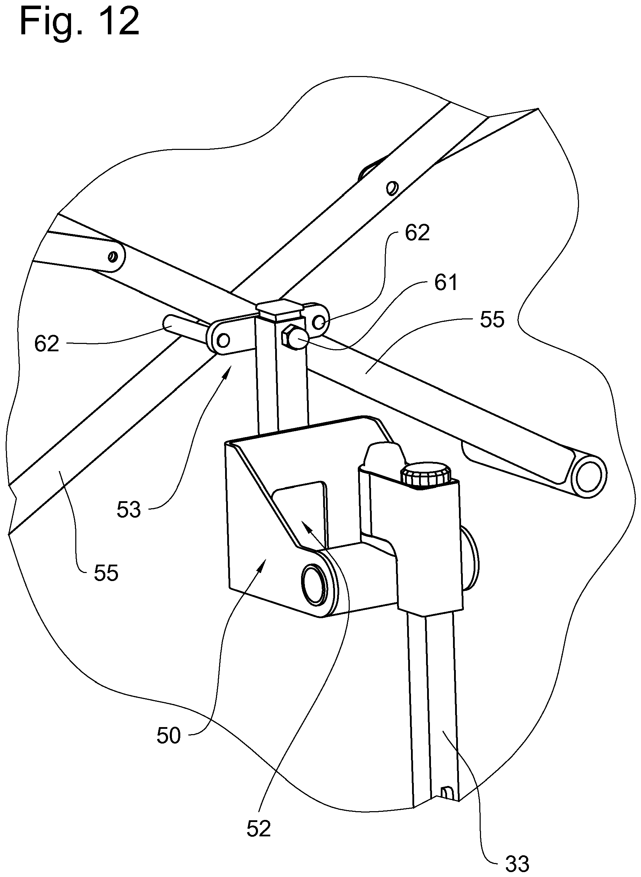

In den Figuren 10 bis 12 ist nunmehr ein Rollator 10 alternativer Bauart in Gesamtansicht sowie in zwei Detailansichten gezeigt, der ebenfalls erfindungsgemäß mit einer nachlaufenden Plattform 11 ausgerüstet ist. Im Unterschied zum eingangs beschriebenen Rollator 10 lässt sich der hier dargestellte Rollator 10 über einen Scherenmechanismus zusammenlegen. Um die Plattform 11 hier festzulegen, wurde der vorbeschriebene Koppelkorb 50 an der die Scherenhebel 55 verbindenden Scherenachse 61 festgelegt, welche von einem Schraubenbolzen gebildet ist. Mittels einer Befestigungsspange 53, welche den Kreuzbereich der Scherenhebel 55 umfängt und deren Stützstreben 62 auf den Scherenhebeln 55 aufliegen, wird ein seitliches Verkippen der Plattform 11 verhindert. So ist eine Dreh- oder Schwenkbewegung um die Scherenachse 61 sicher vermieden.

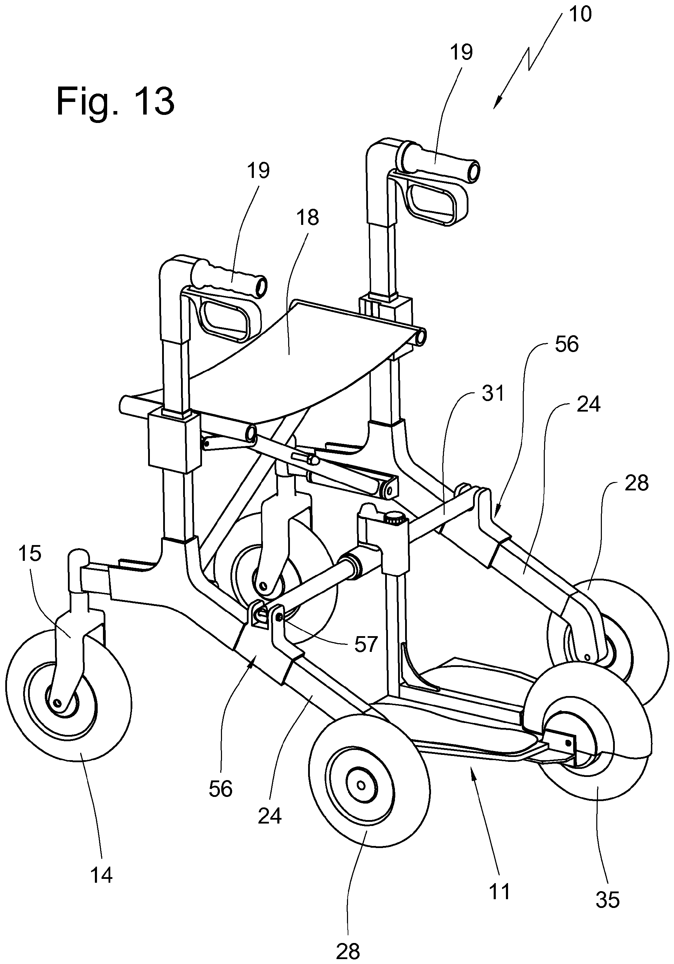

Fig. 13 zeigt den Rollator 10 gemäß Fig. 9 mit einer alternativ befestigten Plattform 11. Hier wurden die die Hinterräder 28 haltenden Streben 24 mit Aufnahmegabeln 56 versehen, in welche dann eine Koppelstange 31 eingesetzt ist. Infolgedessen ist die Plattform 11 analog zu dem in Fig. 3 dargestellten und beschriebenen Rollator festgelegt.

Es ist denkbar, dass bei der Ausführungsform gemäß Fig. 13 die Koppelstange 31 in einer der Aufnahmegabeln 56 über einen Schraubbolzen 57 schwenkbar festgelegt ist. Alternativ ist es jedoch auch denkbar, dass die Koppelstange 31 herausnehmbar in den Aufnahmegabeln 56 gehalten und durch geeignete Elemente dort in der Funktionsstellung gesichert ist.

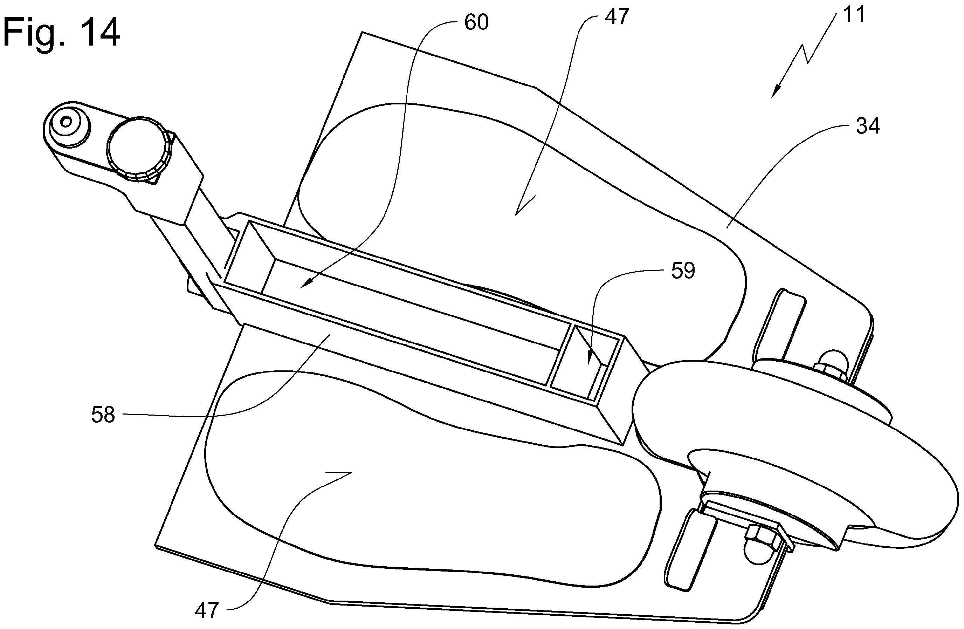

Abschließend ist in Fig. 14 eine alternative Ausführungsform der Plattform 11 dargestellt. Diese unterscheidet sich vom eingangs beschriebenen Ausführungsbeispiel insbesondere dadurch, dass auf der Oberseite des Brettes 34 ein Gehäuse 58 angeordnet ist. Dies ist hier offen, das heißt ohne eine zugehörige Abdeckung gezeigt. Dieses Gehäuse 58 verfügt über einen ersten Aufnahmeraum 59, in welchem beispielsweise die Steuerungselektronik untergebracht sein kann. Ein zweiter Aufnahmeraum 60 dient der Aufnahme eines nicht dargestellten Akkumulators 39. Auch hier ist es denkbar, den Akkumulator zu Ladezwecken zu entnehmen. Alternativ können Ladekontakte an der Außenseite des Gehäuses 58 oder am Akkugehäuse vorgesehen sein, um den Akkumulator auch während der Installation innerhalb des zweiten Aufnahmeraumes aufladen zu können.

Der Rollator 10 kann mit einem optischen oder akustischen Signalgeber, wie Klingel oder Hupe, versehen sein, um andere Verkehrsteilnehmer zu warnen oder entsprechend aufmerksam zu machen. Verfügt der Rollator 10 über einen den Fahrweg abtastenden Sensor, kann der Signalgeber zur Ausgabe eines Warnsignals genutzt werden, um beispielsweise vor Hindernissen zu warnen. Auch kann dann ein Bremsvorgang in der Motorsteuerung ausgelöst werden.

Es ist denkbar, den Rollator 10 mit einer Beleuchtung zu versehen. Dabei kann es sich um eine Beleuchtung in Anlehnung an die Straßenverkehrsordnung handeln, wesentlicher erscheint jedoch eine Beleuchtung des Rollator-Fahrwegs. Eine solche Fahrweg-Beleuchtung ermöglicht es bei der Benutzung auf schlecht ausgeleuchteten Wegen Hindernisse oder Bodenunebenheiten rechtzeitig zu erkennen.

Ein Display am Rollator oder eine Datenkopplung mit einem Mobilgerät erlaubt es, dem Benutzer Statusinformationen des Rollators 10 anzuzeigen. Hierzu kann der Ladezustand, die wahrscheinliche Reichweite oder die Geschwindigkeit zählen. Es ist jedoch auch die Integration einer Navigationsfunktion denkbar.

Sinnfälliger Weise verfügt der erfindungsgemäße Rollator 10 über einen Hauptschalter in der Nähe einer der Haltegriffe 19 oder der Koppeleinrichtung 32. Dieser Hauptschalter ermöglicht oder unterbricht die elektrische Verbindung zwischen der Stromquelle und den elektrischen Verbrauchern, insbesondere dem Motor. Eine Kontrollleuchte signalisiert die Stellung des Hauptschalters.

Die Plattform 11 als Antriebsbauteil kann auch genutzt werden, um andere Transportgeräte wie Kinderwagen, Rollstuhl oder Warentransportgeräte wie z. B. Wagen von Postzustelldiensten anzutreiben. Dient die Plattform 11 als Antrieb für einen Rollstuhl, kann die Begleitperson auf die Plattform 11 aufsteigen.

**Bezugszeichenliste**

| | | | |
|---|---|---|---|
| 10 | Rollator | 36 | Schutzeinrichtung |
| 11 | nachlaufende Plattform | 37 | Schutzblech |
| 12 | Rahmen | 38 | Plattformradgabel |
| 13 | rohrartiges Gestänge | 39 | Akkumulator |
| 14 | Vorderrad | 40 | Schubaufnahme |
| 15 | vordere Radgabel | 41 | Halteschraube |
| 16 | Radgabelhalterung | 42 | Hülsenabschnitt |
| 17 | vertikale Drehachse von 16 | 43 | Lagerdorn |
| 18 | Sitz-/Stützbrett | 44 | Drehachse von 32 |
| 19 | Haltegriffe | 45 | Lagerhülse |
| 20 | hinterer Rahmenabschnitt | 46 | Tragarm |
| 21 | vorderer Rahmenabschnitt | 47 | Fläche |
| 22 | Halteteil von 21 | 48 | Befestigungselement |
| 23 | Kniehebel | 49 | Klemmeinrichtung |
| 24 | Strebe | 50 | Koppelkorb |
| 25 | Langloch von 22 | 51 | Achselement von 50 |
| 26 | horizontale Verbindungsstange | 52 | Schubausnehmung |
| | | 53 | Befestigungsspange |
| 27 | hintere Radgabel | 54 | Kreuzungsbereich von 55 |
| 28 | Hinterrad | 55 | Scherenhebel |
| 29 | geometrische Hinterachse | 56 | Aufnahmegabel |
| 30 | Radialebene von 28 | 57 | Schraubbolzen |
| 31 | Koppelstange | 58 | Gehäuse |
| 32 | Koppeleinrichtung | 59 | erster Aufnahmeraum |
| 33 | Vertikalstrebe | 60 | zweiter Aufnahmeraum |
| 34 | Brett | 61 | Scherenachse |
| 35 | Plattformrad | 62 | Stützstrebe |
| | | 64 | Schellen |

## Patentansprüche

1. Rollator (10),
- mit in einem in Fahrtrichtung vorne liegenden Radpaar und einem in Fahrtrichtung hinten liegenden Radpaar,
- mit einem Rahmen (12), der nach hinten gerichtete Streben aufweist, wobei jede Strebe ein hinteres Rad (28) des hinteren Radpaares hält,
- mit einer nachlaufenden Plattform (11), die am Rollator (10) befestigt ist, wenigstens ein Rad aufweist und eine Stehfläche (47) für eine den Rollator (10) nutzende Person zur Verfügung stellt,
- mit einem elektromotorischen Antrieb, mittels dessen der Rollator (10) zumindest in Fahrtrichtung vorwärts bewegbar ist, wobei
- die nachlaufende Plattform (11) mit ihrer Stehfläche (47) zwischen den Rädern des hinteren Radpaares angeordnet ist, wobei
- der Rollator (10) mit einer Koppeleinrichtung (32) versehen ist, mittels derer die Plattform (11) zug- und schublasthaltend am Rollator (10) angeordnet ist,
**dadurch gekennzeichnet, dass**
- die Koppeleinrichtung (32) zur Anbindung einer Vertikalstrebe (33) über eine Schubaufnahme (40) verfügt, in welcher die Vertikalstrebe (33) verschiebbar gelagert ist,
- die Vertikalstrebe (33) eine Verbindung zwischen der Plattform (11) und der Koppeleinrichtung (32) herstellt.

2. Rollator (10) nach Anspruch 1, **dadurch gekennzeichnet, dass** die Plattform (11) eine sich nach hinten verjüngende Stehfläche (47) aufweist.

3. Rollator (10) nach Anspruch 1 oder 2, **dadurch gekennzeichnet, dass** die Plattform (11) an ihrem hinten liegenden Ende mit zumindest einem Rad versehen ist, welches insbesondere als Antriebsrad mit integriertem Elektromotor ausgebildet ist.

4. Rollator (10) nach Anspruch 3, **dadurch gekennzeichnet, dass** die Plattform (11) einen Akkumulator (39) zur Stromversorgung des Elektromotors trägt, wobei dieser insbesondere an der Unterseite der Plattform oder auf der Oberseite der Plattform (11) angeordnet ist.

5. Rollator (10) nach Anspruch 1, **dadurch gekennzeichnet, dass** die Koppeleinrichtung (32) mit einem Gelenk versehen ist, welches eine durch Nickbewegungen hervorgerufene Relativverlagerung von Rollator (10) und Plattform (11) ermöglicht und eine Drehachse (44) zwischen Rollator (10) und Plattform (11) definiert, um welche das Gespann aus Rollator (10) und Plattform (11) bei einer Kurvenfahrt knickt.

6. Rollator (10) nach Anspruch 1 oder 5, **dadurch gekennzeichnet, dass** die Koppeleinrichtung (32) mit einer Horizontalachse versehen ist, mittels derer die Plattform (11) von einer der Nutzung dienenden Funktionsstellung in eine Lagerstellung bewegbar ist.

7. Rollator (10) nach Anspruch 6, **dadurch gekennzeichnet, dass** die Koppeleinrichtung (32) im Kreuzungsbereich (54) eines dem Rollator (10) zugeordneten Scherenhebels (55) angeordnet ist.

8. Rollator (10) nach Anspruch 6, **dadurch gekennzeichnet, dass** die Koppeleinrichtung (32) Teil einer Koppelstange (31) ist, die die Hinterräder (28) haltenden Streben verbindet.

9. Rollator (10) nach Anspruch 6, **dadurch gekennzeichnet, dass** die Plattform (11) in ihrer Funktionsstellung unterhalb der Koppeleinrichtung (32) angeordnet ist und mittels einer Vertikalstrebe (33) in der Koppeleinrichtung (32) gehalten ist.

10. Rollator (10) nach Anspruch 9, **dadurch gekennzeichnet, dass** die Koppeleinrichtung (32) eine Schubaufnahme (40) aufweist, die die Vertikalstrebe (33) aufnimmt und innerhalb derer die Vertikalstrebe (33) verschieblich gehalten ist.

11. Rollator (10) nach Anspruch 6, **dadurch gekennzeichnet, dass** die Koppeleinrichtung (32) eine Hubhilfe aufweist, mittels derer eine Bewegung der Plattform (11) von ihrer Funktionsstellung in ihre Lagerstellung unterstützt wird, wobei insbesondere eine mechanische Hubhilfe, wie beispielsweise eine Hubfeder vorgesehen ist.

12. Rollator (10) nach Anspruch 3 und 6, **dadurch gekennzeichnet, dass** das Rad mit einer um die Radachse drehbaren Schutzeinrichtung (31) versehen ist, welche in der Lagerstellung der Plattform (11) zum Nutzer des Rollators weist und die zum Nutzer weisende Lauffläche des Rades abdeckt.

13. Rollator (10) nach Anspruch 5, **dadurch gekennzeichnet, dass** die Plattform (11) auch bei einer Kurvenfahrt innerhalb einer Fläche nachläuft, die seitlich von den Radialebenen der hinteren Räder begrenzt ist.

14. Rollator (10) nach einem der vorhergehenden Ansprüche, **dadurch gekennzeichnet, dass** die Plattform (11) von der Koppeleinrichtung (32) trennbar ist.

15. Rollator (10) nach einem der vorhergehenden Ansprüche, **dadurch gekennzeichnet, dass** die Plattform (11) entlang einer fahrtrichtungsparallelen Längsachse zusammenlegbar ist.

## Claims

1. A rollator (10),
- with a wheel pair at the front in the direction of travel and a wheel pair at the rear in the direction of travel,
- with a frame (12) comprising rearwardly directed struts, wherein each strut holds a rear wheel (28) of the rear wheel pair,
- with a trailing platform (11), which is fastened to the rollator (10), comprises at least one wheel and provides a standing surface (47) for a person using the rollator (10),
- with an electromotive drive, by means of which the rollator (10) can move forwards at least in the direction of travel,
- the trailing platform (11) with its standing surface (47) being arranged between the wheels of the rear wheel pair,
- the rollator (10) being provided with a coupling means (32), by means of which the platform (11) is arranged on the rollator (10) in such a way as to bear tensile and thrust loads,
**characterised in that**
- the coupling means (32) has a thrust absorbing member (40) for connecting a vertical strut (33), in which thrust absorbing member the vertical strut (33) is displaceably mounted,
- the vertical strut (33) produces a connection between the platform (11) and the coupling means (32).

2. A rollator (10) according to claim 1, **characterised in that** the platform (11) comprises a rearwardly tapering standing surface (47).

3. A rollator (10) according to claim 1 or claim 2, **characterised in that** the platform (11) is provided at the rear end thereof with at least one wheel, which takes the form in particular of a drive wheel with integral electric motor.

4. A rollator (10) according to claim 3, **characterised in that** the platform (11) carries a storage battery (39) for supplying the electric motor with power, said battery being arranged in particular on the underside of the platform or on the top of the platform (11).

5. A rollator (10) according to claim 1, **characterised in that** the coupling means (32) is provided with a joint which enables relative displacement of rollator (10) and platform (11) to be brought about by nodding movements and defines an axis of rotation (44) between rollator (10) and platform (11) around which the combination of rollator (10) and platform (11) bends on cornering.

6. A rollator (10) according to claim 1 or claim 5, **characterised in that** the coupling means (32) is provided with a horizontal axis by means of which the platform (11) is movable from a functional position serving for use into a stored position.

7. A rollator (10) according to claim 6, **characterised in that** the coupling means (32) is arranged in the region of intersection (54) of a scissor member (55) associated with the rollator (10).

8. A rollator (10) according to claim 6, **characterised in that** the coupling means (32) is part of a coupling rod (31) which connects the struts holding the rear wheels (28).

9. A rollator (10) according to claim 6, **characterised in that**, in its functional position, the platform (11) is arranged below the coupling means (32) and is held in the coupling means (32) by means of a vertical strut (33).

10. A rollator (10) according to claim 9, **characterised in that** the coupling means (32) comprises a thrust absorbing member (40) which accommodates the vertical strut (33) and within which the vertical strut (33) is displaceably held.

11. A rollator (10) according to claim 6, **characterised in that** the coupling means (32) comprises a lifting aid, by means of which the platform (11) is assisted in its movement from its functional position into its stored position, wherein in particular a mechanical lifting aid, such as for example a lifting spring, is provided.

12. A rollator (10) according to claim 3 and claim 6, **characterised in that** the wheel is provided with a protective means (31) rotatable about the wheel axis, which means points towards the user of the rollator when the platform (11) is in the stored position, and which covers the running tread of the wheel pointing towards the user.

13. A rollator (10) according to claim 5, **characterised in that**, even during cornering, the platform (11) trails within an area which is defined laterally by the radial planes of the rear wheels.

14. A rollator (10) according to one of the preceding claims, **characterised in that** the platform (11) is separable from the coupling means (32).

15. A rollator (10) according to one of the preceding claims, **characterised in that** the platform (11) is foldable along a longitudinal axis parallel to the direction of travel.

## Revendications

1. Déambulateur (10)
- avec une paire de roues situées à l'avant dans le sens du déplacement et une paire de roues située à l'arrière dans le sens du déplacement,
- avec un cadre (12) qui présente des jambes orientées vers l'arrière, chaque jambe portant une roue arrière (28) de la paire de roues arrière,
- avec une plateforme arrière (11) qui est fixée au déambulateur (10), possède au moins une roue et présente une surface d'appui (47) pour une personne utilisant le déambulateur (10) et
- avec un dispositif d'entraînement à moteur électrique au moyen duquel le déambulateur (10) peut se déplacer au moins vers l'avant,
- la plateforme arrière (11) avec sa surface d'appui (47) étant disposée entre les roues de la paire de roues arrière et
- le déambulateur (10) étant doté d'un dispositif de couplage (32) au moyen duquel la plateforme (11) est disposée sur le déambulateur (10) de manière à maintenir les charges de traction et de poussée,
**caractérisé en ce que**
- le dispositif de couplage (32) possède, pour être relié à une jambe verticale (33), un réceptacle de poussée (40) dans lequel la jambe verticale (33) est insérée de manière coulissante et
- la jambe verticale (33) relie la plateforme (11) au dispositif de couplage (32).

2. Déambulateur (10) selon la revendication 1, **caractérisé en ce que** la plateforme (11) présente une surface d'appui (47) se rétrécissant vers l'arrière.

3. Déambulateur (10) selon la revendication 1 ou 2, **caractérisé en ce que** la plateforme (11) est dotée à son extrémité arrière d'au moins une roue qui est configurée plus particulièrement comme une roue motrice avec un moteur électrique.

4. Déambulateur (10) selon la revendication 3, **caractérisé en ce que** la plateforme (11) porte un accumulateur (39) pour alimenter le moteur électrique en courant, lequel est monté plus particulièrement sur la face inférieure de la plateforme ou sur la face supérieure de la plateforme (11).

5. Déambulateur (10) selon la revendication 1, **caractérisé en ce que** le dispositif de couplage (32) est doté d'une articulation qui permet par des mouvements d'oscillation le déplacement relatif du déambulateur (10) et de la plateforme (11) et définit un axe de rotation (44) entre le déambulateur (10) et la plateforme (11) autour duquel l'ensemble du déambulateur (10) et de la plateforme (11) pivote pour tourner.

6. Déambulateur (10) selon la revendication 1 ou 5, **caractérisé en ce que** le dispositif de couplage (32) est doté d'un axe horizontal au moyen duquel la plateforme (11) peut passer d'une position fonctionnelle servant à l'utilisation à une position de rangement.

7. Déambulateur (10) selon la revendication 6, **caractérisé en ce que** le dispositif de couplage (32) est disposé dans la zone de croisement (54) d'un bras de ciseau (55) associé au déambulateur (10).

8. Déambulateur (10) selon la revendication 6, **caractérisé en ce que** le dispositif de couplage (32) fait partie d'une barre de couplage (31) qui relie les jambes retenant les roues arrière (28).

9. Déambulateur (10) selon la revendication 6, **caractérisé en ce que**, dans sa position de fonctionnement, la plateforme (11) est disposée sous le dispositif de couplage (32) et est maintenue dans le dispositif de couplage (32) au moyen d'une jambe verticale (33).

10. Déambulateur (10) selon la revendication 9, **caractérisé en ce que** le dispositif de couplage (32) possède un réceptacle de poussée (40) qui reçoit la jambe verticale (33) et dans lequel la jambe verticale (33) est maintenue de manière coulissante.

11. Déambulateur (10) selon la revendication 6, **caractérisé en ce que** le dispositif de couplage (32) possède un système d'assistance au levage qui assiste le mouvement de la plateforme (11) de sa position de fonctionnement à sa position de rangement, un système d'assistance au levage mécanique tel que, par exemple, un ressort de levage étant plus particulièrement prévu.

12. Déambulateur (10) selon les revendications 3 et 6, **caractérisé en ce que** la roue est dotée d'un dispositif de protection (31) pouvant tourner autour de l'axe de la roue qui, lorsque la plateforme (11) est en position de rangement, fait face à l'utilisateur du déambulateur et recouvre la surface de roulement de la roue située face à l'utilisateur.

13. Déambulateur (10) selon la revendication 5, **caractérisé en ce que**, même dans les virages, la plateforme (11) se déplace à l'intérieur d'une surface qui est limitée latéralement par les plans radiaux des roues arrière.

14. Déambulateur (10) selon une des revendications précédentes, **caractérisé en ce que** la plateforme (11) peut être séparée du dispositif de couplage (32).

15. Déambulateur (10) selon une des revendications précédentes, **caractérisé en ce que** la plateforme (11) peut être pliée le long d'un axe longitudinal parallèle à la direction de déplacement.
